# EUROPEAN PATENT APPLICATION

(11) **EP 4 656 893 A1**
(43) Date of publication of application: **03.12.2025**
(21) Application number: 25179720.5
(22) Date of filing: 29.05.2025
(51) Int. Cl.: F16C 19/06, F16C 33/58, F16C 35/063

(54) **BEARING FOR MOTOR VEHICLE AXLE SHAFT**

(30) Priority: 29.05.2024 IT 202400012202
(71) Applicant: I.T.S. Italia S.p.A., 31023 Resana (TV) (IT)
(72) Inventor: Menin, Boris, 36020 Pove del Grappa (VI) (IT); Lazzari, Tommaso, Shangai, 200000 (CN); Masiero, Andrea, 30035 Mirano (VE) (IT)
(74) Representative: Caldon, Giuliano

(57) **Abstract**

Bearing for motor vehicle axle shaft, which comprises an external ring (2), an internal ring (3), which is extended concentric with the external ring (2) and is provided with a projecting portion (30), and a plurality of rolling elements (4), which are interposed between the internal ring (3) and the external ring (2). The bearing further comprises blocking means (5), mounted on the projecting portion (30) of the internal ring (3) and comprising at least two blocking elements (51), which are mechanically engaged on the projecting portion (30) of the internal ring (3) and enclose a third annular seat (50) therebetween, in which said axle shaft is intended to be inserted. Each blocking element (51) is provided with at least one fixing hole (510), which is aligned with the fixing hole (510) of the adjacent blocking element (51), and the blocking means (5) comprise at least one fixing element (6), which engages the fixing holes (510) of the two adjacent blocking elements (51), in order to tighten together the two blocking elements (51) with the axle shaft placed in the third annular seat (50) and connected to the internal ring (3).

## Description

### Field of application

The present invention relates to a bearing, in particular for the axle shaft of a motor vehicle, according to the preamble of independent claim no. 1.

The bearing in question is preferably mountable on the drive axle shaft of the vehicle, to support the axle shaft in rotation with respect to the main frame of the vehicle, although it may also be considered suitable for supporting other types of rotor shafts in rotation (e.g. machine tool shafts, etc.) with respect to a fixed frame.

The bearing in question is advantageously intended to be mounted on the axle shaft of a kart, preferably a kart used in a competitive environment.

The bearing which is the subject of the invention in question therefore falls within the field of bearing production, and more in general the production of mechanical components for vehicles. Advantageously, the bearing in question falls within the field of the production of mechanical components for karts, and preferably for karts used in a competitive environment.

### State of the art

As is known, motor vehicles, such as karts, are provided with a main frame, an engine, and at least one axle shaft, rotatably mounted on the main frame, which is connected to the engine and to a pair of wheels of the vehicle.

In particular, the axle shaft can be mounted at the front, and therefore connected to the front wheels, or at the rear, and therefore connected to the rear wheels.

For example, in karts the axle shaft is usually placed at the rear, and is therefore connected to the pair of rear wheels and to the engine, to receive from the latter a motion to impart to the wheels, while the front wheels are usually mounted directly on the frame, individually and independently of each other.

The axle shaft is rotatably mounted on the main frame by means of bearings, which allow the axle shaft to be supported mounted on the frame, minimizing friction between the axle shaft and the frame, thus improving the performance of the vehicle, e.g. a kart.

In fact, the lower the friction between the moving part (the axle shaft) and the rigid part (frame and relative support), the higher the rotation speed of the axle shaft itself (and therefore of the relative wheels) for the same power imparted by the engine.

The known type of bearings for vehicle axle shafts comprise an external ring and an internal ring, placed concentric with the external ring, between which are placed several balls (or rollers) adapted to rotatably connect the two rings, reducing the coefficient of rolling friction between the latter. In particular, the internal ring comprises a sleeve portion, projecting with respect to the external ring, which internally delimits an annular housing seat, into which the axle shaft is inserted.

The known bearings envisage that the sleeve portion of the internal ring be provided with several through holes, usually three through holes equally spaced apart along the circumferential extension of the sleeve, into which respective grub screws are inserted which are screwed in once the axle shaft has been inserted, to keep the axle shaft constrained to the internal ring of the bearing once inserted into the annular housing seat.

Such bearings of known type have proved to be not free from drawbacks in practice.

In particular, the main drawback lies in the fact that the system of fixing the axle shaft to the internal ring used in the known types of bearings does not guarantee a homogeneous and well-distributed seal. In fact, it is complicated to guarantee the same tightening for all the screws, and therefore a homogeneous distribution of the tightening force for all the screws. In the frequent case where the grub screws are screwed in at different depths and with different tightening forces, a decentralization of the axle shaft occurs with respect to the extension axis of the internal ring, since the extension axis of the axle shaft will be shifted towards the less screwed grub screws.

This has repercussions on the rotary motion of the entire axle shaft, and therefore on the final performance of the kart during use.

A further drawback is given by the fact that the aforesaid known type of tightening system does not guarantee a safe and reliable seal, and requires frequent and continuous tightening interventions.

In fact, over time the grub screws tend to unscrew, losing their abutment on the axle shaft, which therefore tends not to be securely constrained to the internal ring. Therefore, in the known bearing solutions it is necessary for an operator to frequently check the tightening of the grub screws and, if necessary, to re-tighten them in the event of loosening.

Therefore, the known type of bearings do not allow to achieve the maximum possible performance, and require high time and costs for their maintenance during use.

Also known on the market are bearings provided with blocking means comprising two blocking elements which are tightened to the axle shaft by means of screws placed through corresponding holes made on the blocking elements. In particular, when the blocking elements are tightened onto the axle shaft, they engage the projecting portion of the internal ring, retaining it to the axle shaft itself. An example of such a known type of bearing is described in US 1,821,877. However, even these latest known solutions are not able to completely solve the problems mentioned above, in particular with regard to the reliability of the fixing seal.

### Presentation of the invention

In this situation, the problem underlying the present invention is therefore to overcome the drawbacks manifested by the above-mentioned known bearings by providing a bearing, in particular for the axle shaft of motor vehicles, which allows for improved fixing of the internal ring of the bearing to the axle shaft.

Another object of the present invention is to provide a bearing which is stable and balanced both before and after its mounting, for example on the axle shaft of the vehicle during its use. Another object of the present invention is to provide a bearing which allows for constant and homogeneously distributed tightening on the rotating member, for example the axle shaft, during use.

Another object of the present invention is to provide a bearing which allows to increase the performance of the motor vehicle on which it is mounted.

Another object of the present invention is to provide a bearing which ensures a secure fixing to the axle shaft.

Another object of the present invention is to provide a bearing which is simple to mount. Another object of the present invention is to provide a bearing which is simple and economical to manufacture.

### Brief description of the drawings

The technical features of the invention, according to the aforesaid objects, can be clearly seen from the contents of the claims set out below and the advantages thereof will become more evident in the detailed description which follows, made with reference to the attached drawings, which represent a purely exemplifying and non-limiting embodiment thereof, in which:
- Figure 1 shows an axonometric view of a preferred embodiment of the bearing according to the present invention, mounted on an axle shaft of a vehicle;

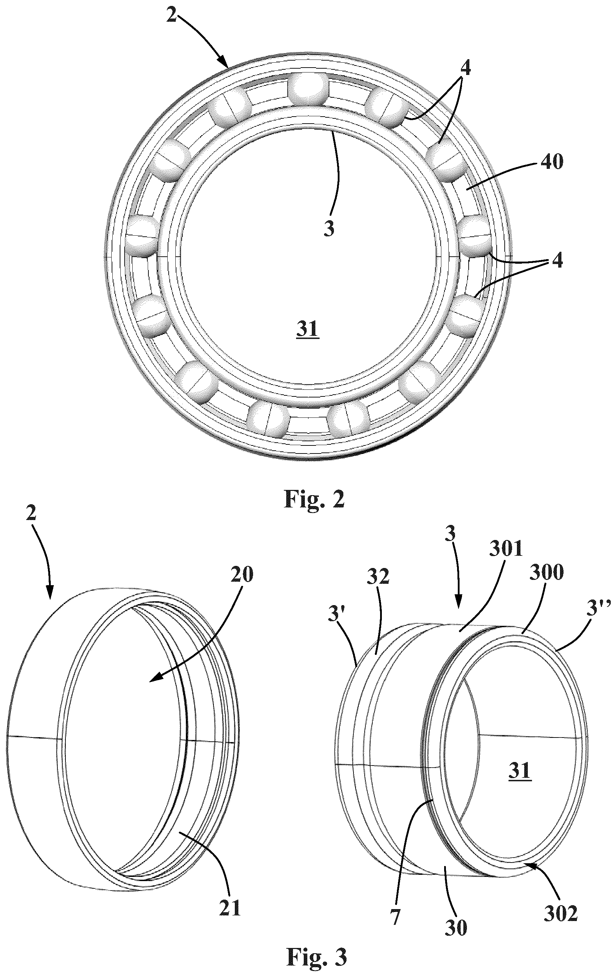

- Figure 2 shows a front view, in section, of the bearing of Figure 1;
- Figure 3 shows an axonometric view of a detail of the bearing of Figure 1, related to an external ring (on the left) and an internal ring (on the right);

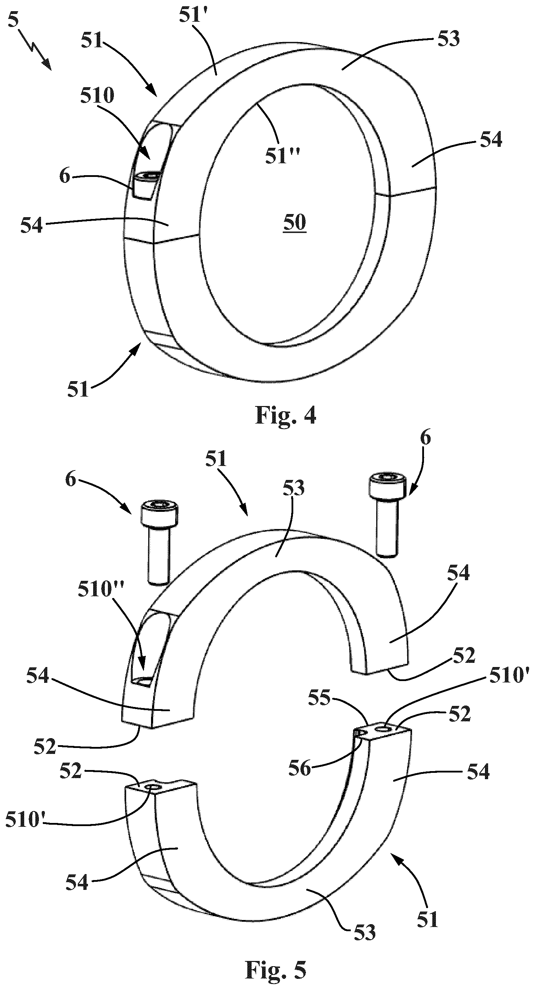

- Figure 4 shows a view of a further detail of the bearing of Figure 1, related to blocking means;
- Figure 5 shows an exploded view of the blocking means of Figure 4;
- Figure 6 shows a lateral sectional view of the bearing of Figure 1, with some parts removed to better highlight others;
- Figure 7 shows a view of a detail of Figure 6, related to an engagement between a blocking element and the external ring of the bearing;
- Figure 8 shows a view of a detail, related to the engagement between the blocking element and the external ring of the bearing, in accordance with a first embodiment of the bearing which is the subject of the present invention;
- Figure 9 shows an axonometric view of the internal ring and the external ring of the bearing in question, in accordance with a second embodiment;
- Figure 10 shows an axonometric view of a third embodiment of the bearing which is the subject of the present invention.

### Detailed description of a preferred embodiment

With reference to the attached drawings, the reference numeral 1 indicates a bearing which is the subject of the present invention, which is placed for the rotating connection of a rotating member and a fixed support, such as in particular an axle shaft 10 of a motor vehicle to the relative frame. The bearing 1 which is the subject of the present invention can be used in various technical fields, for example the field of the construction of vehicle parts (for example bearing for axle shaft), in the field of the construction of mechanical machine parts (for example bearing for rotor shaft) etc. In more detail, the bearing 1 in question is advantageously intended to be installed on a frame of a motor vehicle and connected to an axle shaft 10 of the same vehicle, for example a kart, to rotatably support the axle shaft 10 with respect to the frame, reducing friction between the axle shaft 10 and the other mechanical components to which it is connected.

The bearing 1 which is the subject of the present invention can be advantageously employed in all those situations in which the rotating member (axle shaft, rotor shaft, etc.) is housed with clearance inside the internal ring of the bearing, to improve the fixing between the bearing and the same rotating member.

In accordance with the invention, the bearing 1 comprises an external ring 2, preferably made of steel, which is advantageously intended to be mounted on a fixed element of the vehicle (for example a kart), such as in particular a frame of the same vehicle.

The external ring 2 is extended around a main axis X and internally defines a first annular seat 20. The bearing 1 further comprises an internal ring 3, also preferably made of steel, which is extended around the same main axis X, concentric with the external ring 2.

In more detail, the internal ring 3 has a smaller diameter than the external ring 2, so as to define a free space, with a circular crown, between the internal ring 3 and the external ring 2.

The internal ring 3 is provided with a projecting portion 30, which projects, along the main axis X, externally from the first annular seat 20 of the external ring 2.

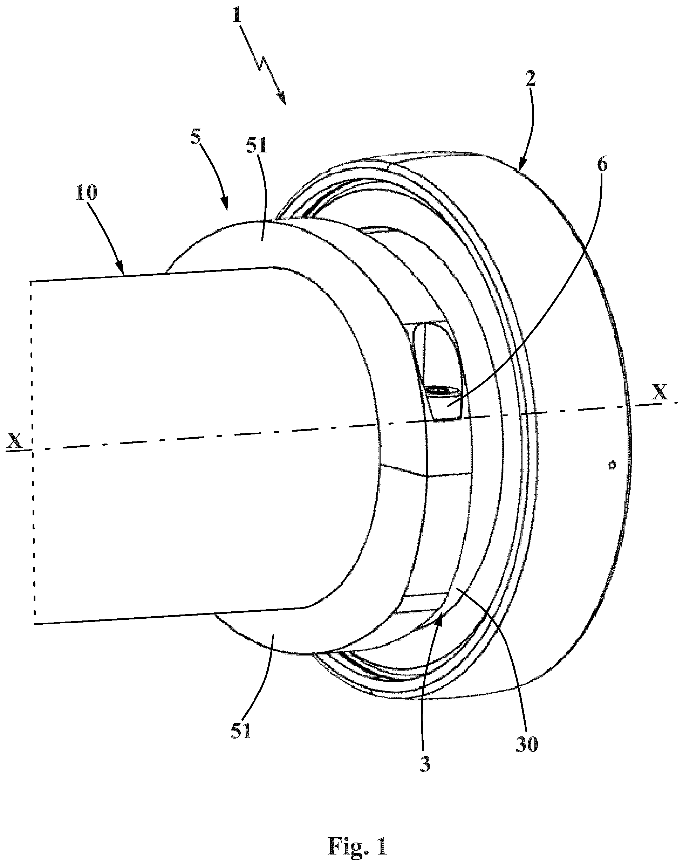

The internal ring 3 defines a second annular seat 31, in which the axle shaft 10 is intended to be at least partially housed, as visible in Figure 1.

Preferably, the axle shaft 10 is housed with clearance in the second annular seat 31 of the internal ring 3, so that it can slide freely in the second annular seat 31 until it is blocked in a certain operating position.

Advantageously, the projecting portion 30 of the internal ring 3 is extended up to a free end 300 thereof, and is provided with an external surface 301, directed towards the exterior of the second annular seat 31.

In more detail, the internal ring 3 has a substantially sleeve-like shape, and is extended between a first end 3', and a second end 3", which is placed outside the first annular seat 20. In particular, the internal ring 3 is formed by a base portion, which is housed in the first annular seat 20 of the external ring 2 and is extended from the first end 3' of the internal ring 3, and from the aforesaid projecting portion 30, which is extended in a projection, preferably in a single body, from the base portion, parallel to the main axis X, up to the second end 3" of the same internal ring 3, which coincides with the free end 300 mentioned above.

Preferably, the base portion and the projecting portion 30 of the internal ring 3 have the same external diameter.

Advantageously, the second annular seat 31 is extended along the main axis X, between the first end 3' and the second end 3" of the internal ring 3.

In more detail, the internal ring 3 is provided with a first opening, placed at the first end 3', and an opposite second opening, placed at the second end 3", and the second annular seat 31 is extended between the first and second openings of the internal ring 3.

In other words, the base portion and the projecting portion 30 of the internal ring 3 each internally delimit a respective section of the second annular seat 31.

Preferably, the base portion and the projecting portion 30 have the same internal diameter, and the second annular seat 31 is therefore extended with a constant diameter along the entire length of the internal ring 3.

In particular, the diameter of the second annular seat 31 is such as to allow the axle shaft 10 to be housed substantially to size.

The bearing 1 further comprises a plurality of rolling elements 4, for example balls or rollers, which are placed in the first annular seat 20 of the external ring 2, interposed between the internal ring 3 and the external ring 2. In other words, the rolling elements 4 are housed in the free, circular space defined between the internal ring 3 and the external ring 2.

As is known, the aforesaid rolling elements 4 allow the two external and internal rings 2, 3 to slide against each other, reducing the friction coefficient between the latter.

The shape, size, and material of the above rolling elements 4 depends on the applications and contexts of use of the bearing 1. Such features of the rolling elements 4 are well known to those skilled in the art, therefore they will not be discussed in the remainder of the present invention. Advantageously, the rolling elements 4 are placed in mechanical connection between the external rings 2 and the internal rings 3. In particular, the external ring 2 is connected to the internal ring 3 by means of the rolling elements 4, by means of a shape coupling.

In more detail, the external ring 2 is provided with a first internal surface, which laterally delimits the aforesaid first annular seat 20, which is provided with a first guide track 21. Advantageously, the first guide track 21 is extended in depression on the first internal surface of the external ring 2, preferably for the entire circumferential extension of the external ring 2, and is designed to at least partially house the rolling elements 4.

Advantageously, the base portion of the internal ring 3 is provided with a first external surface, which faces opposite the first internal surface of the external ring 2 and which is provided with a second guide track 32. Advantageously, the second guide track 32 is extended in depression on the first external surface of the base portion of the internal ring 3, preferably for the entire circumferential extension of the same base portion, and is designed to at least partially house the rolling elements 4.

In more detail, the rolling elements 4 are interposed between the first internal surface of the external ring 2 and the first external surface of the base portion of the internal ring 3, housed in the first and second guide tracks 21, 32 where they are susceptible to sliding during the operation of the bearing 1.

Advantageously, the bearing 1 further comprises a spacer element 40, preferably made of polymeric material, known in jargon as a "cage", which has a substantially annular shape, and is preferably provided with multiple seats, one for each rolling element 4, to support the rolling elements 4 spaced apart from each other and equally distributed circumferentially between the external ring 2 and the internal ring 3.

Therefore, the aforesaid engagement of the rolling elements 4 in the guide tracks 21, 32 of the respective external 2 and internal 3 rings allows the aforesaid rings 2, 3 to be mechanically connected, preventing their separation along a direction parallel to the main axis X.

The bearing 1 further comprises blocking means 5, mounted on the projecting portion 30 of the internal ring 3 and susceptible of being tightened on the axle shaft 10 to constrain the latter to the internal ring 2.

In accordance with the idea underlying the present invention, the blocking means 5 comprise at least two blocking elements 51, which are mechanically engaged on the projecting portion 30 of the internal ring 3.

The blocking elements 51 enclose a third annular seat 50 therebetween, coaxial to the second annular seat 31 of the internal ring 3, in which the axle shaft 10 is intended to be inserted. In other words, the blocking elements 51 are intended to be placed enclosing the external surface of the axle shaft 10 to connect the latter to the internal ring 3 on which they are mounted. Advantageously, each blocking element 51 has an at least partially annular shape, for example a half-ring or a quarter-ring, which is complementary to the section of the other blocking elements 51, so that once placed close together the blocking elements 51 delimit the aforesaid third annular seat 50 therebetween.

Preferably, the blocking elements 51 are configured so as to define a third annular seat 50 which has an internal diameter substantially corresponding to an external diameter of the axle shaft 10.

In more detail, each blocking element 51 is extended between an external face 51' and an opposite internal face 51", which faces a center of the third annular seat 50 and faces opposite the internal face 51" of an adjacent blocking element 51. Advantageously, the internal face 51" of each blocking element 51 has an at least partially annular extension, and at least partially delimits the third annular seat 50 laterally. In particular, the internal face 51" of each blocking element 51 is preferably counter-shaped to a corresponding portion of an external surface of the axle shaft 10, and is intended to be placed resting against the external surface of the axle shaft 10, partially enclosing the latter.

In accordance with the preferred embodiment illustrated in the attached figures, the bearing 1 comprises two blocking elements 51, having a semi-annular shape, which define therebetween, once mounted on the internal ring 3, the third annular seat 50.

Advantageously, the blocking elements 51 are mechanically engaged on the projecting portion 30 near the second end 3" of the internal ring 3, i.e. Near the free end 300 of the projecting portion 30.

Advantageously, the blocking elements 51 are shaped so as to extend with at least one portion thereof to at least partially close the second opening of the internal ring 3.

In more detail, each blocking element 51 has a substantially L-shaped sectional form, and in particular comprises a main portion 55, placed in abutment against the free end 300 of the projecting portion 30 of the internal ring 3, and a connection portion 56, which is extended projectingly and transversely from the main portion 55, to at least partially enclose the external surface 301 of the projecting portion 30.

In more detail, the connection portion 56 has an internal surface, which is facing opposite and preferably placed in abutment against the external surface 301 of the projecting portion 30.

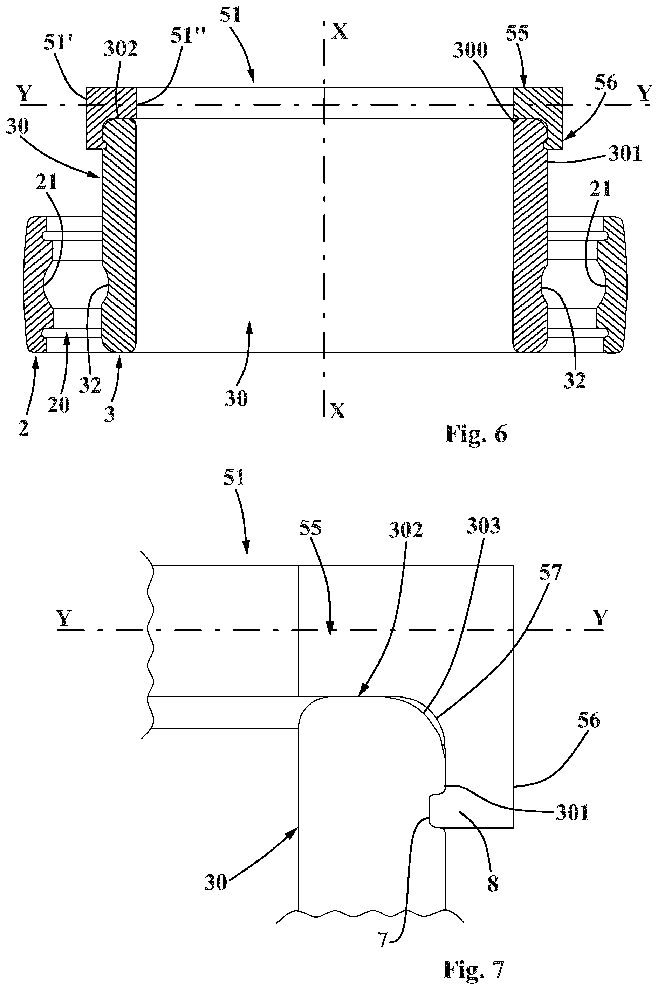

In particular, the connection portion 56 is extended parallel to the main axis X, while the main portion 55 is extended transversely, along an extension direction Y which is preferably orthogonal to the main axis X, as visible in Figure 6.

Advantageously, the projecting portion 30 of the internal ring 3 has a front surface 302, placed in abutment against the main portion 55 of the blocking element 51, which is connected to the external surface 301 of the same projecting portion 30 with a first connector portion 303, which has a first curvature radius R1.

Advantageously, the main portion 55 of the blocking element 51 is connected to the connection portion 56 with a second connection portion 57, which has a second curvature radius, which is smaller than the first curvature radius of the first connector portion 303.

In other words, the first connector portion 303 is placed spaced from the second connection portion 57, at least at their respective vertices, so as to limit the risk of cracks forming in the blocking element 51 during the use of the bearing 1.

Advantageously, the blocking elements 51 are therefore placed so as to delimit a third annular seat 50 therebetween which is placed substantially alongside the second annular seat 31 of the internal ring 3, along the main axis X.

In particular, the third annular seat 50 is provided with an inlet opening and an opposite outlet opening, which is placed facing opposite, preferably alongside, the second opening of the internal ring 3.

Operationally, bearing 1 can be mounted on the axle shaft 10 by inserting one end of the axle shaft 10 into the third annular seat 50 defined by the blocking elements 51, and subsequently into the second annular seat 31 of the internal ring 3 aligned with the third annular seat 50.

Each blocking element 51 is provided with at least one fixing hole 510, which is aligned with the fixing hole 510 of the adjacent blocking element 51.

Advantageously, the fixing holes 510 are made on the connection portion 56 of the blocking element 51, preferably orthogonally to the main axis X and the extension direction Y.

The bearing 1 further comprises at least one fixing element 6, which engages the fixing holes 510 of two adjacent blocking elements 51, in order to tighten together the two blocking elements 51 with the axle shaft placed in the third annular seat 50 (defined by the blocking elements 51) and with the axle shaft 10 connected to the internal ring 3.

In more detail, the fixing element 6 can be tightened to move the two blocking elements 51 closer and further apart, and to mutually move the two blocking elements 51 closer and further apart from each other, thus increasing and reducing the internal diameter of the third annular seat 50. Advantageously, the two blocking elements 51 are movable by means of the fixing element 6 between a tightening position, in which they tighten the axle shaft 10, in particular with the respective internal faces 51" of the blocking elements 51 abutting against an external surface of the axle shaft 10, and a release position, in which the internal faces 51" of the blocking elements 51 are spaced from the external surface of the axle shaft 10, to allow the bearing 1 to be freely removed from the latter.

In other words, in the tightening position the blocking elements 51 delimit a third annular seat 50 therebetween which has an internal diameter (defined by the distance between the internal faces 510" of the blocking elements 51) substantially equal to the external diameter of the axle shaft 10, while in the release position the blocking elements 51 delimit a third annular seat 50 therebetween which has an internal diameter greater than the external diameter of the axle shaft 10.

Thereby, when the axle shaft is inserted into the third annular seat 50, it is placed in contact with the entire external surface thereof against the internal faces 51" of the blocking elements 51, determining a tighter retention of the axle shaft 10, and not a punctual one, which allows the coupling surface between the axle shaft 10 and the blocking elements 51 to be maximized. Advantageously, each blocking element 51 is extended along an at least partially annular profile, between two opposite abutment faces 52, each of which is facing the abutment face 52 of the adjacent blocking element 51.

In particular, the abutment faces 52 of two adjacent blocking elements 51 are placed in abutment with each other when the blocking elements 51 are placed in the tightening position, tightened together.

Advantageously, the abutment faces 52 of two adjacent blocking elements 51 are parallel to each other, thus allowing to maximize the coupling surface between the two blocking elements 51.

In more detail, each abutment face 52 is extended between the internal face and the external face of the corresponding blocking element 51, preferably on a plane parallel to a radial direction that cuts the blocking element 51 between the internal face and the external face.

Advantageously, the internal face of each blocking element 51 is extended along an at least partially circular, and preferably semi-circular, profile, while the external face is at least partially elliptical, and preferably semi-elliptical.

In other words, each blocking element 51 is shaped so as to have enlarged lateral ends, near the abutment faces 52. In more detail, each blocking element 51 advantageously has a curved central portion 53 and two lateral flanks 54, each of which is provided with an abutment face 52, in which the lateral flanks 54 define enlarged portions of the blocking element 51 with respect to the central portion 53.

In more detail, the lateral flank 54 of each blocking element 51 has an average radial size, measured between the internal face 51" and the external face 51' of the blocking element 51, which is greater than the average radial extension of the corresponding central portion 53.

Advantageously, each abutment face 52 has an area, measured on a section plane parallel to the radial extension of the blocking element 51, which is greater than the area measured on the central portion 53 on another radial section plane.

Advantageously, each fixing hole 510 is extended starting from a respective abutment face 52 of the corresponding blocking element 51.

In more detail, each fixing hole 510 is extended from an abutment face 52, away from the adjacent blocking element 51, preferably along a direction orthogonal to the abutment face 52. Thereby, the tightening force exerted by the fixing element 6 is exerted orthogonally to the abutment faces 52 which are tightened abutting each other.

Advantageously, each blocking element 51 comprises a first threaded fixing hole 510' and a second through fixing hole 510".

In particular, the first fixing hole 510' has an internal thread, which can extend along the entire length of the first fixing hole 510', or even partially.

In more detail, the first fixing hole 510' is preferably extended blindly, starting from the corresponding abutment face 52, up to an abutment wall.

Alternatively, the second fixing hole 510" is extended through, starting from the corresponding abutment face 52, up to an access opening obtained on the external surface of the blocking element 51, to allow an operator to access the fixing element 6 by screwing it into the first fixing hole 510'. For example, in accordance with the preferred embodiment, the fixing element 6 is a screw, which has an elongated, at least partially threaded stem, which is housed and screwed into the first fixing hole 510', and an enlarged and shaped head, which is preferably housed in the second fixing hole 510" and is accessible through the access opening to allow an operator to act on the shaped head using a tool, allowing it to be screwed into the first fixing hole 510'.

Obviously, without departing from the scope of protection of the present invention, it is possible to make both fixing holes 510', 510" through, with the fixing element 6 comprising a screw body that projects downwards from the first fixing hole 510', and a retaining element, of the nut type, engaged (preferably screwed) onto the screw body.

In accordance with the preferred embodiment, a blocking element 51 is provided with two first fixing holes 510', both threaded, while the other blocking element 51 is provided with two second fixing holes 510", both through.

Alternatively, in accordance with a variant embodiment not illustrated in the attached figures, each blocking element 51 is provided with both a first fixing hole 510' and a second fixing hole 510". Thereby, the first fixing hole 510' of each blocking element 51 is aligned with the second fixing hole 510" of an adjacent blocking element 51, and the second fixing hole 510" of each blocking element 51 is aligned with the first fixing hole 510' of an adjacent blocking element 51. Thereby, the fixing elements 6 are inserted in opposite directions on the two blocking elements 51, to allow tightening, distributing the forces more evenly on the two blocking elements 51. Advantageously, each blocking element 51 is engaged by shape relationship to the projecting portion 30 of the internal ring 3.

In more detail, in the aforesaid engagement by shape relationship, the blocking element 51 is rigidly fixed to the projecting portion 30 of the ring 3 due to the mutual conformation of the blocking element 51 with respect to the projecting portion 30.

In particular, each blocking element 51 and the projecting portion 30 are shaped so that the respective contact surfaces have substantially complementary shapes, which interfere with each other, keeping the blocking element 51 blocked to the projecting portion. Thereby, in particular, the contact area between each blocking element 51 and the projecting portion 30 is maximum when the blocking means 5 are tightened on the axle shaft 10, thus significantly increasing the resulting friction which contributes to the axial retention of the internal ring 3 on the axle shaft 10. Advantageously, the internal surface of the connection portion 56 of each blocking element 51 is extended around the main axis X with substantially the same shape, preferably cylindrical, as the external surface 301 of the projecting portion 30 of the internal ring 3. Thereby, the substantial correspondence in shape, in particular cylindrical, between the internal surface of the connection portion 56 and the external surface 301 of the projecting portion 30, maximizes the contact area between the blocking element 51 and the internal ring 3, increasing the friction between the blocking elements 51 tightened on the axle shaft 10 and the projecting portion 30 of the internal ring 3.

In more detail, one between the blocking element 51 and the projecting portion 30 of the internal ring 3 is provided with at least one insertion cavity 7, which is extended radially, and the other between the blocking element 51 and the projecting portion 30 of the internal ring 3 is provided with at least one engagement element 8, which engages by shape relationship in the insertion cavity 7. Advantageously, the insertion cavity 7 is extended circumferentially around the main axis X, for the entire circumferential extension of the corresponding blocking element 51 or of the corresponding projecting portion 30, and advantageously the engagement element 8 is extended circumferentially around the main axis X, for the entire circumferential extension of the corresponding blocking element 51 or of the corresponding projecting portion 30.

Preferably, in accordance with the preferred embodiment, the insertion cavity 7 is obtained on the projecting portion 30 of the internal ring 3, while the engagement element 8 is obtained on the blocking element 51.

Advantageously, the insertion cavity 7 is extended in depression on the external surface 301 of the projecting portion 30 of the internal ring 3, along a radial direction, preferably up to a bottom wall thereof, and preferably near the free end 300 of the projecting portion 30.

Advantageously, the engagement element 8 projects radially from the blocking element 51, preferably projecting from the connection portion 56 of the latter, and in particular projecting radially from the internal face of the connection portion 56.

Operationally, during the tightening of the blocking elements 51, the engagement element 8 is inserted into the insertion cavity 7, preferably until it abuts against its bottom wall, ensuring that the blocking element 51 is mechanically constrained to the external ring 3, in particular for mutual movements parallel to the main axis X.

In accordance with this embodiment, the projecting portion 30 of the internal ring 3 has a circumferential insertion cavity 7, which encloses the entire projecting portion 30 of the internal ring 3, while the blocking element 51 has an engagement element 8, preferably in the form of a radial protuberance, which encloses the entire blocking element 51, and in particular its connection portion 56.

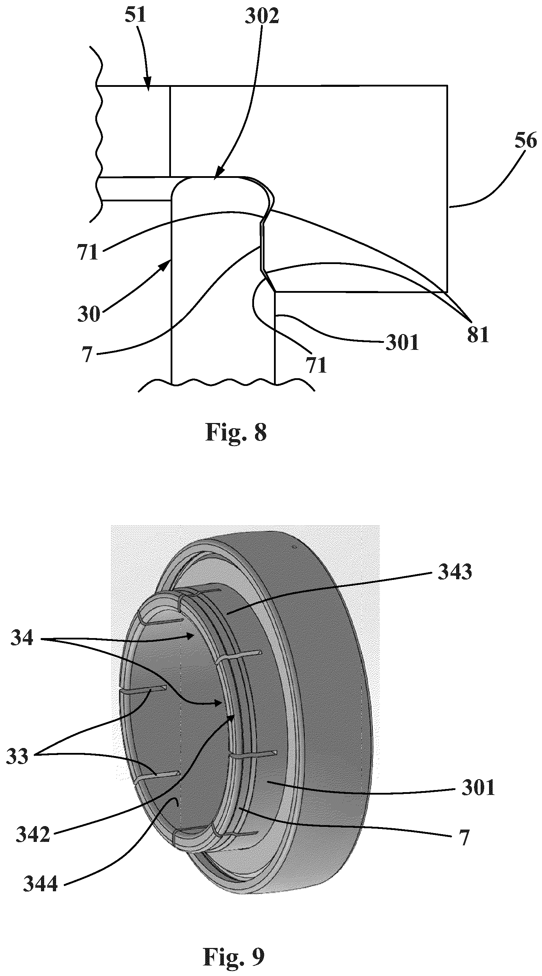

Advantageously, in accordance with a first embodiment shown in Figure 8, the insertion cavity 7 is delimited axially (in particular with reference to the main axis X) by two guide walls 71, which are extended inclined with respect to the bottom wall of the insertion cavity 7 itself and are preferably placed as a connection between the bottom wall itself and the external surface 301 of the projecting portion 30.

Preferably, the engagement element 8 is delimited axially (in particular with reference to the main axis X) by two flared walls 81, which are extended inclined with respect to the main axis X.

Advantageously, the two flared walls 81 have an inclination with respect to the main axis X that is substantially equal to the inclination of the lead-in walls 71 of the insertion cavity 7. Thereby, the substantial correspondence between the inclinations of the flared walls 81 and the lead-in walls 71 facilitates the introduction of the engagement element 8 inside the insertion cavity 7 during assembly, reducing the risk of incorrect alignment or blocking during assembly.

Advantageously, when the blocking means 5 are tightened to the axle shaft 10, the flared walls 81 of the engagement element 8 are placed in abutment against the lead-in walls 71 of the insertion cavity 7.

Advantageously, with reference to a second embodiment shown in Figure 9, the projecting portion 30 of the internal ring 3 is provided with a plurality of notches 33, which are placed around the main axis X and are extended, transversely to the main axis X itself, in a manner passing through the projecting portion 30.

Preferably, each notch 33 is extended, in particular parallel to the main axis X, starting from the free end 300 of the internal ring 3.

Advantageously, the notches 33 define a plurality of fins 34, which are positioned around the main axis X alternating with the notches 33 themselves and each is extended along the main axis X up to a free end portion 342 thereof.

Preferably, the free end portions 342 of the fins 34 define the free end 300 of the projecting portion 30 of the internal ring 3.

Advantageously, when the blocking means 5 are tightened on the axle shaft 10, they are able to deform the fins 34, preferably elastically, towards the main axis X.

In particular, when the blocking means 5 are tightened on the axle shaft, the fins 34 are deformed with their respective free end portions 342 approaching the main axis X.

Advantageously, in such a situation, at least the free end portions 342 of the fins 34 are adapted to be in direct contact with the axle shaft.

Thereby, the elastic deformation of the fins 34 towards the main axis X allows the clearance between the projecting portion 30 of the internal ring 3 and the axle shaft 10 to be eliminated, thus ensuring a more stable coupling between the internal ring 3 and the axle shaft 10, significantly improving the axial fixing of the bearing to the axle shaft 10, preventing, in particular, unwanted mutual movements between the axle shaft 10 and the bearing 1.

Optionally, the fins 34 are subjected to an annealing process, in order to improve the elastic properties thereof.

Preferably, each fin 34 is extended radially (in particular with respect to the main axis X) between an external wall 343 facing toward the exterior of the second annular seat 31 of the internal ring 3, and an opposite internal wall 344. Advantageously, the external walls 343 of the fins 34 at least partially define the external surface 301 of the projecting portion 30.

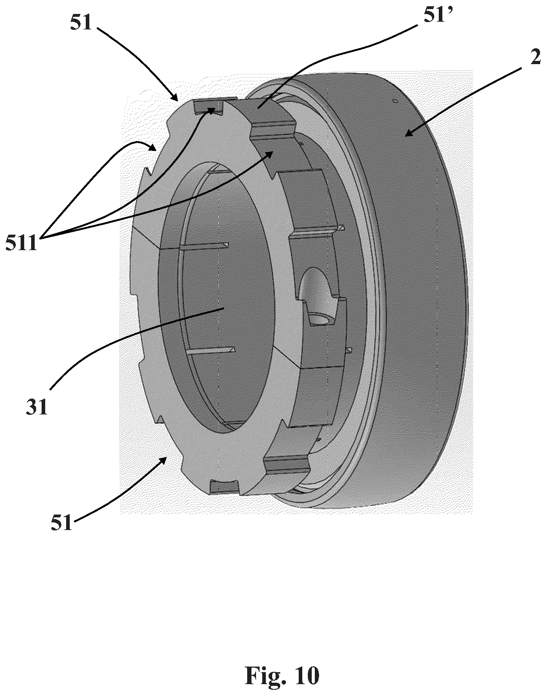

Preferably, the insertion cavity 7 is extended in depression on the external wall 343 of each fin 34. Advantageously, with reference to a third embodiment shown in Figure 10, each blocking element 51 comprises a plurality of recesses 511 which are extended in depression on the external face 51' of the corresponding blocking element 51 as they approach the central axis X.

In particular, the recesses 511 have the function of lightening the blocking elements 51 while maintaining the mechanical strength of the latter and an optimal weight balance to reduce vibrations during use of the bearing 1 itself.

Therefore, the invention thus conceived achieves the pre-set objects.

## Claims

1. Bearing for motor vehicle axle shaft, which comprises:
- an external ring (2), which is extended around a main axis (X) and internally defines a first annular seat (20);
- an internal ring (3), which is extended around said main axis (X), concentric with said external ring (2), is provided with a projecting portion (30), which projects, along said main axis (X), externally from the first annular seat (20) of said external ring (2), and which defines a second annular seat (31) in which said axle shaft is intended to be housed;
- a plurality of rolling elements (4), which are placed in the first annular seat (20) of said external ring (2), interposed between said internal ring (3) and said external ring (2);
- blocking means (5), mounted on the projecting portion (30) of said internal ring (3) and susceptible of being tightened on said axle shaft in order to constrain said axle shaft to said internal ring (3);
wherein said blocking means (5) comprise:
- at least two blocking elements (51), which are mechanically engaged on the projecting portion (30) of said internal ring (3) and enclose therebetween a third annular seat (50), coaxial with said second annular seat (31), in which said axle shaft is intended to be inserted;
wherein each blocking element (51) is provided with at least one fixing hole (510), which is aligned with the fixing hole (510) of the adjacent blocking element (51);
- at least one fixing element (6), which engages the fixing holes (510) of said two adjacent blocking elements (51), in order to tighten together said two blocking elements (51) with said axle shaft placed in said third annular seat (50) and connected to said internal ring (3)
said bearing being **characterized in that** each said blocking element (51) is engaged by shape relationship to the projecting portion (30) of said internal ring (3).

2. Bearing according to claim 1, **characterized in that** each blocking element (51) is extended between an external face (51') and an opposite internal face (510"), and said internal face (51") is directed towards a center of said third annular seat (50) and faces the internal face (51") of one said adjacent blocking element (51); wherein the internal face (51") of each said blocking element (51) has an at least partially annular extension, and at least partially laterally delimits said third annular seat (50).

3. Bearing according to claim 1 or 2, **characterized in that** each blocking element (51) of said blocking means (5) is extended along an at least partially annular profile, between two opposite abutment faces (52), each of which facing the abutment face (52) of the adjacent said blocking element (51);
wherein each fixing hole (510) is extended starting from a respective abutment face (52) of the corresponding said blocking element (51).

4. Bearing according to claim 3, **characterized in that** each said blocking element (51) has a curved central portion (53), and two lateral flanks (54), each of which provided with one said abutment face (52);
wherein said lateral flanks (54) define portions of said blocking element (51) that are enlarged with respect to said central portion (53).

5. Bearing according to any one of the preceding claims, **characterized in that** one of said blocking elements (51) comprises two first threaded fixing holes (510'), and one said adjacent blocking element (51) comprises two second through fixing holes (510"), aligned with the first fixing holes (510') of said adjacent blocking element (51).

6. Bearing according to any one of the preceding claims, **characterized in that** one between said blocking element (51) and the projecting portion (30) of said internal ring (3) is provided with at least one insertion cavity (7), which is radially extended, and the other between said blocking element (51) and the projecting portion (30) of said internal ring (3) is provided with at least one engagement element (8), which is engaged by shape relationship in said insertion cavity (7).

7. Bearing according to claim 6, **characterized in that** said insertion cavity (7) is extended circumferentially around said main axis (X), for the entire circumferential extension of the corresponding said blocking element (51) or said projecting portion (30), and that said engagement element (8) is extended circumferentially around said main axis (X), for the entire circumferential extension of the corresponding said blocking element (51) or said projecting portion (30).

8. Bearing according to any one of the preceding claims, **characterized in that** the projecting portion (30) of said internal ring (3) is extended up to a free end (300) thereof, and is provided with an external surface (301), directed towards the exterior of said second annular seat (31);
wherein each said blocking element (51) has a substantially L-shaped sectional form, and comprises a main portion (55), placed in abutment against the free end (300) of said projecting portion (30), and a connection portion (56), which is extended projectingly and transversely from said main portion (55), to at least partially enclose the external surface (301) of said projecting portion (30).

9. Bearing according to claim 8, **characterized in that** the projecting portion (30) of said internal ring (3) has a front surface (302), placed in abutment against the main portion (55) of said blocking element (51), which is connected to the external surface (301) with a first connector portion (303) which has a first curvature radius;
wherein the main portion (55) of said blocking element (51) is connected to said connection portion (56) with a second connector portion (57) which has a second curvature radius, which is smaller than the curvature radius of said first connector portion (303).

10. Bearing according to any one of the preceding claims, **characterized in that** the projecting portion (30) of said internal ring (3) is provided with a plurality of notches (33), which are placed around said main axis (X) and are extended, transversely to said main axis (X), in a manner passing through said projecting portion (30).

11. Bearing according to claim 10, **characterized in that** said notches (33) define a plurality of fins (34), which are positioned around said main axis (X) alternating with said notches (33) and each one is extended along said main axis (X), up to a free end portion (342) thereof.

12. Bearing according to claim 11, **characterized in that** said blocking means (5), tightened on said axle shaft (10), are adapted to deform said fins (34) in approach to said main axis (X).
